# EUROPÄISCHE PATENTANMELDUNG

(11) **EP 4 349 743 A1**
(43) Veröffentlichungstag der Anmeldung: **10.04.2024**
(21) Anmeldenummer: 23202036.2
(22) Anmeldetag: 06.10.2023
(51) Int. Cl.: B65G 47/76, B65G 47/82

(54) **UMLENKEINRICHTUNG**

(30) Priorität: 07.10.2022 DE 202022105673 U
(71) Anmelder: WIPOTEC GmbH, 67657 Kaiserslautern (DE)
(72) Erfinder: Joachim, Matthias, 66953 Pirmasens (DE)
(74) Vertreter: Eder Schieschke & Partner mbB

(57) **Zusammenfassung**

Modulare Umlenkeinrichtung, umfassend ein Gehäuse und wenigstens zwei Lenkelemente zur lenkenden Beaufschlagung von entlang einer Förderebene bewegten, diskreten Produkten, wobei jedes Lenkelement einen um eine Schwenkachse ausgebildeten Schwenkabschnitt mit zugehörigem Lenkabschnitt aufweist, wobei im Gehäuse für jedes Lenkelement jeweils ein Antrieb mit einem Antriebselement vorgesehen ist, wobei jedes Antriebselement so mit dem Schwenkabschnitt des zugehörigen Lenkelements gekoppelt oder koppelbar ist, dass das Lenkelement durch eine Vorschubbewegung des Antriebselements in eine Schwenkbewegung um die Schwenkachse versetzt wird, und wobei die Lenkelemente mit ihren Schwenkabschnitten außerhalb des Gehäuses angeordnet sind, und wobei ein Abschnitt jedes Antriebselements in einer Vorschubbewegung entlang einer geraden Vorschubrichtung in Bezug auf das Gehäuse durch jeweils eine eigene, aus dem Gehäuse herausführende Durchtrittsöffnung hindurchschiebbar ist.

## Beschreibung

Die vorliegende Erfindung betrifft eine modulare Umlenkeinrichtung, mit deren Hilfe in einer Spur bewegte Produkte so beaufschlagbar sind, dass sie auf eine andere Spur umgelenkt werden.

Derartige Umlenkeinrichtungen sind aus der industriellen Handhabung von Produkten bekannt. Beispielsweise werden auf einem Förderband aufliegende und dabei transportierte Produkte dadurch sortiert, dass sie bei Erfüllung bestimmter Kriterien durch ein Lenkelement seitlich beaufschlagt werden, um auf eine andere Spur entlang des Förderbandes oder gar vom Förderband herunter geschoben zu werden. Als Lenkelemente kommen dabei verschwenkbare und/oder verschiebliche Elemente infrage, die von pneumatische oder elektrisch betriebenen Aktoren betätigbar sind. Sie können in die Spur des herannahenden Produkts bewegt werden, um es bei Kontakt aus der Spur heraus zu lenken. Denkbar ist auch die impulsartige seitliche Beaufschlagung des Produkts durch das Lenkelement, um es aus seiner Spur heraus und vorzugsweise vom Förderband herunter zu stoßen.

Die bekannten Umlenkeinrichtungen können ein oder mehrere Lenkelemente umfassen, die jeweils von einem zugehörigen Aktor (beispielsweise einem Pneumatik-Zylinder) betätigt werden, um dabei aus einer Bereitschaftslage in eine Arbeitslage und zurück bewegt zu werden. Die Bereitschaftslage soll so definiert sein, dass das Lenkelement in dieser Lage ein Produkt nicht beaufschlagt. In der Arbeitslage dagegen wird das Produkt durch Kontakt mit dem Lenkelement auf eine andere Spur oder gar vom Transportband herunter bewegt.

Besondere Anforderungen gelten hier für die Verarbeitung von Lebensmitteln, die unter speziellen Hygieneanforderungen transportiert und sortiert werden müssen. Insbesondere betrifft dies den Transport von unverschlossenen Verpackungen mit bereits darin befindlichen Lebensmittelprodukten, beispielsweise befüllte Gläser, die noch nicht durch einen Deckel verschlossen wurden, so dass das Produkt während des Transports vor Verunreinigungen sicher geschützt werden muss.

Schließlich muss die Umlenkeinrichtung regelmäßig gereinigt werden. Dies kann beispielsweise durch Dampfstrahlen geschehen, wobei der Kontakt von Wasser mit empfindlichen Komponenten der Umlenkeinrichtung (insbesondere den die Lenkelemente bewegenden Aktoren) möglichst vermieden werden soll. Häufig ist daher ein Gehäuse vorgesehen, welches diese Komponenten weitgehend von der Umgebung abtrennt. Da jedoch die Lenkelemente außerhalb des Gehäuses angeordnet sein müssen, um mit den Produkten zusammenwirken zu können, muss ein bewegliches Antriebselement vorgesehen sein, welches eine mechanische Verbindung von den Aktoren innerhalb des Gehäuses zu den Lenkelementen außerhalb des Gehäuses herstellt und dazu durch eine Gehäuseöffnung hindurchragt. Dazu kann eine für alle Lenkelemente gemeinsame Gehäuseöffnung dienen, die dann vergleichsweise groß ausfällt und gegen das Eindringen von Substanzen bei der Reinigung nur schwer abgedichtet werden kann. Alternativ kann für jedes Lenkelement eine eigene Gehäuseöffnung vorgesehen sein. Aber auch deren Abdichtung bereitet in der aus dem Stand der Technik bekannten Praxis erhebliche Schwierigkeiten.

Aufgabe der Erfindung war es daher, eine Umlenkeinrichtung anzubieten, welche die vorgenannten Nachteile überwindet. Die Aufgabe wird gelöst durch eine modulare Umlenkeinrichtung nach Anspruch 1 und deren Anordnung an einer Fördereinrichtung nach Anspruch 12. Weitere vorteilhafte Ausführungsformen ergeben sich aus den Unteransprüchen.

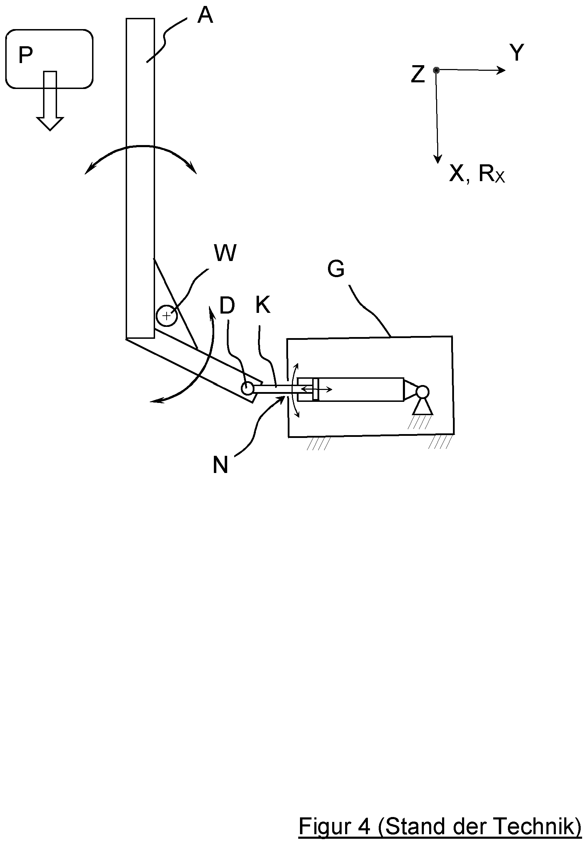

Die Erfindung geht von der Erkenntnis aus, eine besonders gute Abdichtung des Gehäuses zu ermöglichen, wenn für jedes Lenkelement ein eigenes Antriebselement in einer translatorischen Vorschubbewegung, vorzugsweise entlang einer geraden Vorschubrichtung, durch jeweils eine eigene, aus dem Gehäuse herausführende Durchtrittsöffnung hindurchschiebbar ist. Im Stand der Technik dagegen werden die Lenkelemente häufig mithilfe von Pneumatikzylindern bewegt, deren Kolbenstangen (als Antriebselemente) jeweils durch eine Gehäuseöffnung hindurch ragen und an ihrem freien Ende unmittelbar an dem jeweiligen Lenkelement angreifen. Der Angriffspunkt D liegt von einer Schwenkachse des Lenkelements beabstandet, sodass sich das Ende der Kolbenstange beim Übergang von der Bereitschaftslage in die Arbeitslage auf einer Kreisbahn bewegt. Figur 4 zeigt eine solche Anordnung. Dadurch wird auch die gemeinsame Achse von Kolben und Zylinder verschwenkt, sodass die Kolbenstange sich beim Vorschub nicht nur vor und zurück durch die Gehäuseöffnung bewegt, sondern auch um ein Maß quer dazu. Dieses seitliche Spiel muss die Gehäuseöffnung gestatten, was deren Abdichtung schwierig macht.

Die erfindungsgemäße Lösung hingegen gewährleistet eine besonders gute (bevorzugt hermetische) Abdichtung des Gehäuses, indem die die Lenkelemente beaufschlagenden Antriebselemente entlang einer geraden Vorschubrichtung jeweils durch eine eigene Durchtrittsöffnung im Gehäuse hindurch bewegbar sind. Eine gleichzeitige Bewegung des Antriebselements orthogonal zur Vorschubrichtung soll erfindungsgemäß dabei nicht erfolgen. Während des Vorschubs bleibt der in der Durchtrittsöffnung liegende Querschnitt des Antriebselements vorzugsweise konstant. Da das Antriebselement - anders als im Stand der Technik - seine Vorschubbewegung ausschließlich in Richtung seiner Längsachse vollführt, ist es möglich, eine das Antriebselement umlaufende Dichtungen an bzw. in der Durchtrittsöffnung anzuordnen, die ihrerseits keine Verformung quer zur Vorschubrichtung zulassen muss. Die Dichtung kann entsprechend eng am Gehäuse und am Antriebselement anliegen und das Gehäuse dabei besonders gut abdichten.

Die erfindungsgemäße modulare Umlenkeinrichtung umfasst dabei wenigstens zwei Lenkelemente zur lenkenden Beaufschlagung von entlang einer Förderebene bewegten, diskreten Produkten. Jedes Lenkelement weist dabei einen um eine Schwenkachse ausgebildeten Schwenkabschnitt auf, der mit einem sich an den Schwenkabschnitt anschließenden Lenkabschnitt verbunden ist. Der Lenkabschnitt ist zur lenkenden Beaufschlagung des zu sortierenden Produktes ausgebildet.

Die Umlenkeinrichtung ist ferner mit einem eine Unterseite aufweisenden Gehäuse versehen, welches sich in einer Längsrichtung X, einer dazu orthogonal verlaufenden Querrichtung Y und einer zu beiden Richtungen X, Y orthogonal verlaufenden Höhenrichtung Z erstreckt. Im Gehäuse ist für jedes Lenkelement jeweils ein Antrieb vorgesehen mit einem von dem Antrieb angetriebenen, verschieblichen Antriebselement. Der Antrieb ist relativ zum Gehäuse starr montiert und/oder relativ zu einer das Gehäuse tragenden, mit dem Erdboden verbundenen Konstruktion ortsfest. Vorzugsweise ist der Antrieb selbst nicht schwenkbar. Beispielsweise kann es sich um einen im Gehäuse fest montierten Pneumatikzylinder handeln, wobei das Antriebselement durch eine mit einem Kolben des Zylinders gekoppelte Kolbenstange bzw. Stößelstange gebildet wird. Erfindungsgemäß bewegt sich ein Abschnitt des Antriebselements (vorzugsweise das gesamte Antriebselement) beim Vorschub relativ zum Gehäuse in einer geraden Richtung, also ohne dabei seine Lage im Raum bzw. in Bezug zum Gehäuse zu verändern. Insbesondere verschwenkt das Antriebselement beim Vorschub (oder auch bei seiner entgegengesetzten Bewegung zurück in den Zylinder) relativ zum Gehäuse nicht, sondern vollführt eine rein translatorische Vor- und Zurückbewegung.

Jedes Antriebselement ist so mit dem Schwenkabschnitt des zugehörigen Lenkelements gekoppelt oder koppelbar, dass das Lenkelement bei einer Vorschubbewegung des Antriebselements eine Schwenkbewegung um die Schwenkachse vollführt.

Erfindungsgemäß sind die Lenkelemente mit ihren Schwenkabschnitten außerhalb des Gehäuses angeordnet. Jedes Antriebselement oder zumindest ein Abschnitt davon ist in der zuvor beschriebenen Weise entlang einer geraden Vorschubrichtung durch jeweils seine eigene, aus dem Gehäuse herausführende Durchtrittsöffnung hindurchschiebbar.

In erfinderischer Weise wird hierdurch eine gut abzudichtende Durchtrittsöffnung im Gehäuse ermöglicht, die mit dem durch die Durchtrittsöffnung hindurchgeführten Antriebselement zugleich eine mechanische Verbindung zwischen dem im Gehäuse angeordneten Antrieb und dem außerhalb des Gehäuses angeordneten Lenkelement zulässt.

Die erfindungsgemäße Umlenkeinrichtung ermöglicht es, das Gehäuse an der jeweiligen Durchtrittsöffnung unabhängig von der Schwenkposition des zugehörigen Lenkelements gegen das unkontrollierte Eindringen von unerwünschten Substanzen abzudichten. Anders als im Stand der Technik, bei dem eine mit dem Lenkelement gekoppelte Kolbenstange bei ihrem Vorschub ebenfalls (leicht) verschwenkt wird, geschieht dies in der erfindungsgemäßen Ausführung nicht, so dass die Dichtwirkung für jede Schwenkposition gleichermaßen gut aufrechterhalten werden kann. Dadurch lassen sich für die Durchtrittsöffnungen Schutzarten nach DIN EN 60529 beispielsweise in den Klassen IP65, IP67, IP69 oder IP69k erreichen.

Die an der Durchtrittsöffnung wirkende Dichtung hat vorzugsweise ringförmige oder zylindrische Gestalt. Vorzugsweise ist die Durchtrittsöffnung im Gehäuse dazu kreisförmig, und auch das durch die Durchtrittsöffnung hindurchgeführte Antriebselement hat zumindest entlang desjenigen Abschnitts vorzugsweise einen kreisförmigen Querschnitt, der sich während des Vorschubs durch die Öffnung hindurch bewegt. Eine ringförmige Dichtung, die in radialer Richtung zwischen dem Antriebselement und dem Gehäuse in der Durchtrittsöffnung sitzt, kann das Gehäuse so besonders gut abdichten.

Nach einer vorteilhaften Ausführungsform der Umlenkeinrichtung ist vorgesehen, dass die Durchtrittsöffnungen in der Unterseite des Gehäuses angebracht sind, sodass sich die Antriebselemente während des Vorschubs nach unten aus dem Gehäuse heraus bewegen. Dadurch wird eine zusätzliche Sicherheit gegen das ungewollte Eindringen bzw. Einsickern von Reinigungsflüssigkeit in das Gehäuse geschaffen. Darüber hinaus wird sichergestellt, dass eventuell durch die Durchtrittsöffnungen aus dem Gehäuse austretendes Medium (beispielsweise Spülluft) das Gehäuse in einer definierten Richtung verlässt. Dadurch können vor Verunreinigungen zu schützende Produkte außerhalb dieser Richtung gefördert oder in sonstiger Weise bearbeitet werden, ohne durch das austretende Medium oder darin mitgeführte Fremdstoffe verunreinigt zu werden.

Vorzugsweise verläuft die Vorschubrichtung, entlang derer die Antriebselemente vor- und zurück bewegbar sind, parallel zur Höhenrichtung Z. Vorzugsweise ist außerdem vorgesehen, dass die Schwenkachsen der Lenkelemente parallel zur Längsrichtung X ausgerichtet sind. Weiterhin vorzugsweise kann vorgesehen sein, dass die Vorschubrichtung orthogonal zur Schwenkachse verläuft oder dass die Durchtrittsöffnung von wenigstens zwei, vorzugsweise allen Antriebselementen in einer X-Y-Ebene liegt. Beispielsweise kann das Gehäuse auf seiner Unterseite, die sich in einer horizontalen X-Y-Ebene erstrecken kann, mehrere, vorzugsweise in einer Richtung nebeneinander liegende Durchtrittsöffnungen aufweisen, welche jeweils von einem ihr zugeordneten Antriebselement in Z-Richtung durchragt werden.

Eine besonders vorteilhafte Ausführungsform der Erfindung sieht vor, dass eine für alle Lenkelemente gemeinsame Schwenkachse vorgesehen ist. Jedes Lenkelement kann dabei individuell von dem ihm zugeordneten Antrieb aus einer Bereitschaftslage in eine Arbeitslage und zurück verschwenkt werden. Eine gemeinsame Schwenkachse vereinfacht den konstruktiven Aufbau der Umlenkeinrichtung. Außerdem wird es vorteilhaft möglich, die einzelnen Lenkelemente in engem Abstand nebeneinander auf der Schwenkachse anzuordnen.

Vorzugsweise erstreckt sich der Lenkabschnitt eines, mehrerer oder aller Lenkelemente in der Bereitschaftslage orthogonal zu seiner Ausrichtung in der Arbeitslage, sodass sich der Lenkabschnitt von der einen in die andere Lage um 90° verschwenkt. Der Lenkabschnitt erstreckt sich in der Bereitschaftslage vorzugsweise in Höhenrichtung Z und/oder in der Arbeitslage in Querrichtung Y.

Die erfindungsgemäße Überlegung, das Antriebselement entlang einer geraden Vorschubrichtung durch die Durchtrittsöffnungen des Gehäuses zu führen, lässt sich besonders gut verwirklichen mit einer speziell dafür vorgesehenen Gestaltung des Lenkelements. Dazu weist das Antriebselement ein Kopplungselement auf, welches außerhalb des Gehäuses zur Übertragung der Vorschubbewegung und Umwandlung in eine Schwenkbewegung mit dem jeweiligen Schwenkabschnitt des Lenkelements koppelbar oder gekoppelt ist. Die Kopplung erfolgt an einem Angriffspunkt, der erfindungsgemäß während des Vorschubs seine Position in Z-Richtung und/oder in einer in X-Y-Ebene nicht verändert. Vorzugsweise wandert der Angriffspunkt während des Vorschubs am Kopplungselement und am Schwenkabschnitt entlang, wie anhand der Figurenbeispiele näher zu sehen sein wird. Aus Figur 4 ist demgegenüber ersichtlich, dass der Angriffspunkt D im Stand der Technik während des Vorschubs des Kopplungselements und des mit ihm verbundenen Antriebselements K seine Position im Raum verändert und dabei auf einem Kreisbogen um die Schwenkachse W des Lenkelements wandert. Die Durchtrittsöffnung N im Gehäuse ist in diesem Fall aufgrund der sich ebenfalls geringfügig verschwenkenden Längsachse der Kolbenstange bzw. des Antriebselements K nicht befriedigend lösbar. Bleibt der Angriffspunkt während des Vorschubs hingegen im Wesentlichen ortsfest, tritt ein Verschwenken der Kolbenstange nicht auf.

Eine besonders vorteilhafte Ausführungsform der Erfindung sieht dazu vor, dass das Kopplungselement eine Zahnstange und das Schwenkelement ein um die Schwenkachse ausgebildetes Zahnradprofil aufweist, so dass die Zahnstange während des Vorschubs in gerader Vorschubrichtung verschoben wird, während das mit der Zahnstange kämmende Zahnradprofil des Schwenkelements daran abwälzt und das Lenkelement dadurch verschwenkt.

Vorzugsweise sind ein oder mehrere Lenkelemente zur Einnahme der Arbeitslage oder der Bereitschaftslage vorgespannt, insbesondere federvorgespannt. Entweder die Vorschubbewegung oder eine entgegengesetzte Rückzugbewegung des Antriebselements erfolgt dann so gegen die Vorspannung, dass das Lenkelement bei Ausfall des Antriebs automatisch die von der Vorspannung angestrebte Lage einnimmt. Dies kann zur Betriebssicherheit der Umlenkeinrichtung beitragen, indem beispielsweise alle Lenkelemente zur Einnahme der Bereitschaftslage vorgespannt sind, und der Vorschub des jeweils zugehörigen Antriebselements gegen diese Vorspannung erfolgen muss, um das Lenkelement in die Arbeitslage zu bewegen. In der Arbeitslage erstreckt sich der Lenkabschnitt des Lenkelements vorzugsweise zum geförderten Produkt hin und ist dabei beispielsweise knapp oberhalb des Förderbandes positioniert. Bei einem Ausfall des jeweiligen Antriebs oder der gesamten Umlenkeinrichtung würden alle Lenkelemente aus der Spur der Produkte heraus zurück in die Bereitschaftslage geschwenkt werden, um den ungestörten Weitertransport der Produkte zu ermöglichen.

Vorzugsweise sind die Lenkelemente zu einer gemeinsamen Baugruppe zusammengefasst, die zum Austausch oder zu Wartungszwecken als Modul von der Umlenkeinrichtung lösbar ist. Insbesondere kann die Baugruppe eine allen Lenkelementen gemeinsam dienende Schwenkachse ebenso umfassen wie die auf die Schwenkachse aufgesetzten Lenkelemente. Die durch das Gehäuse ragenden Antriebselemente (und gegebenenfalls damit verbundene Kopplungselemente) sind vorzugsweise nicht Teil dieser Baugruppe. Dadurch wird es leicht möglich, einzelne Lenkelemente auszutauschen oder je nach Anwendungsfall unterschiedlich dimensionierte Lenkelemente außen an der Umlenkeinrichtung einzusetzen, indem die gesamte Baugruppe als Modul entnommen und durch eine Baugruppe mit anderen Lenkelementen ersetzt wird.

Voraussetzung dafür ist lediglich, dass die möglicherweise verschiedenen Lenkelemente zur Kopplung mit den Antriebselementen oder deren Kopplungselementen ein einheitliches Kopplungsprofil aufweisen, beispielsweise ein Zahnprofil mit stets gleicher Teilung. Bei der Entnahme eines solchen Moduls trennen sich die Zahnprofile des Schwenkabschnitts einerseits und des Kopplungselements andererseits. Umgekehrt greifen die genannten Zahnprofile beim Einsetzen eines solchen Moduls wieder ineinander, so dass das neue Modul unmittelbar einsatzbereit ist. Zum Befestigen oder Lösen des Moduls kann das Gehäuse der Umlenkeinrichtung geeignete Aufnahmemittel aufweisen, die vorzugsweise auch werkzeuglos betätigbar sind. Die einzelnen Lenkelemente können sich insbesondere in der Länge ihrer Lenkabschnitte unterscheiden, wobei die Länge sowohl innerhalb eines Moduls als auch im Vergleich zu anderen Modulen variieren kann. Auch kann die Anzahl und/oder die individuelle Breite einzelner Lenkelemente eines Moduls frei gewählt werden, sodass ein Modul mit beispielsweise sechs Lenkelementen ausgetauscht werden kann durch eines mit zehn Lenkelementen. Die Lenkelemente können dabei hintereinanderliegend auf die gemeinsame Schwenkachse geschoben werden. Dabei ist lediglich sicherzustellen, dass für die gewünschte Anzahl von Lenkelementen eine geeignete Anzahl von Antrieben bzw. aus dem Gehäuse herausragenden Antriebselementen vorhanden ist. Durch geeignete Distanzscheiben können zwischen einzelnen Lenkelementen auch gezielt Lücken eingebaut werden.

Die erfindungsgemäße Umlenkeinrichtung lässt sich vorteilhaft anordnen an einer Fördereinrichtung, um die von dieser geförderten Produkte zu sortieren. Die Fördereinrichtung ist dabei dazu ausgebildet, Produkte in mindestens einer Spur zu fördern, welche in einer Förderrichtung Rx über eine Förderebene führt. Vorzugsweise umfasst die Fördereinrichtung ein Förderband, welches die Förderebene definiert und auf welchem die Produkte während des Transports aufliegen. Die Umlenkeinrichtung grenzt dabei derart an die Fördereinrichtung an, dass wenigstens ein Lenkelement der Umlenkeinrichtung in seiner Arbeitslage in die Spur eines geförderten Produktes hinein verschwenkt ist, um das Produkt durch Kontakt mit dem Lenkelement auf eine andere Spur umzulenken.

An seinem der Schwenkachse abgewandten freien Ende ist jedes Lenkelement vorzugsweise mit einer schrägen oder gekrümmten Führungskante versehen, die in der Arbeitslage mit dem geförderten Produkt zusammenwirken kann, indem das Produkt bei Förderung in Förderrichtung Rx gegen die Führungskante bewegt und - deren Profil folgend - bei seiner Weiterförderung quer zur Führungskante abgelenkt wird.

Eine vorteilhafte Ausführungsform der Erfindung sieht dabei vor, dass mehrere Lenkelemente mit unterschiedlich langen Lenkabschnitten vorgesehen sind, um ein Produkt wahlweise auf verschiedene, jeweils einem Lenkelement zugeordnete Spuren auf der Transportebene bewegen zu können. Denkbar ist es dabei auch, dass mehrere Lenkelemente gemeinsam eingesetzt werden. Dazu könnten Lenkelemente mit aufsteigender Länge ihrer Lenkabschnitte hintereinander auf der Schwenkachse angeordnet werden, gesehen mit Blick in Förderrichtung X. Je nachdem, aus welcher Spur heraus und in welche Spur hinein ein herannahendes Produkt umgelenkt werden soll, sind die entsprechenden Lenkelemente in die Arbeitslage zu verschwenken, wobei zueinander benachbarte Lenkabschnitte für das Produkt eine gemeinsame Führungskante ausbilden, die seitlich auf das Produkt einwirkt, während es gegen und entlang dieser Kante gefördert wird. Dabei wird es so lange quer zur Förderrichtung Rx gelenkt, bis es das in die Arbeitslage verschwenkte Lenkelement mit dem längsten Lenkabschnitt passiert hat.

Vorzugsweise wird die erfindungsgemäße Anordnung so gewählt, dass die Förderrichtung Rx parallel zur Schwenkachse und/oder zur Längsrichtung X verläuft, und/oder dass die Vorschubrichtung der Antriebselemente orthogonal zur Förderebene verläuft, und/oder dass die Durchtrittsöffnungen für die einzelnen Antriebselemente aus einer vorzugsweise zur Förderebene parallelen Unterseite des Gehäuses herausführen.

Zweckmäßigerweise liegt ein die Förderebene bildendes Förderband so weit seitlich neben dem Gehäuse, dass etwaiges aus den Durchtrittsöffnungen nach unten austretendes Spülmedium nicht zum Förderband hin und zu den darauf aufliegenden Produkten gelangen kann.

Vorzugsweise ist das Gehäuse zu dessen Durchströmung mit einem Spülmedium, insbesondere Luft, beaufschlagbar, beispielsweise als Betauungsschutz und/oder um das Gehäuseinnere zu trocknen. Dazu ist das Spülmedium durch wenigstens einen Zufuhr-Anschluss in das Gehäuse einleitbar, und kann durch wenigstens einen Ausström-Anschluss aus dem Gehäuse wieder herausströmen. Der wenigstens eine Ausström-Anschluss ist dabei dazu ausgebildet, das Medium am Ende des Ausström-Anschlusses in einer Ausströmrichtung in die Umgebung ausströmen zu lassen, die senkrecht zur Förderebene oder von der Spur eines Produktes weggerichtet ist. Dadurch wird sichergestellt, dass gezielt aus dem Gehäuse ausgeleitetes Spülmedium das von der Fördereinrichtung geförderte Produkt nicht kontaminieren kann.

Nach einer besonders bevorzugten Ausführungsform der Erfindung ist vorgesehen, dass die Bewegung des Lenkelements zwischen der Bereitschaftslage und der Arbeitslage durch die Kopplung zweier Elemente bewirkt wird, von denen das eine Element (vorzugsweise ein Kopplungselement) dazu eine ausschließlich translatorische, höchst vorzugsweise geradlinige Bewegung ausführt, während das mit diesem Element gekoppelte zweite Element (vorzugsweise ein Schwenkabschnitt eines Lenkelements) eine ausschließlich rotatorische und ebene Schwenkbewegung ausführt.

Eine Ausführungsform der Erfindung wird nachstehend anhand von Figurenbeispielen näher erläutert. Dabei zeigen
- Figur 1: eine perspektivische Seitenansicht einer erfindungsgemäßen Anordnung einer Umlenkeinrichtung an einer Fördereinrichtung
- Figur 2: eine schematische Seitenansicht einer Umlenkeinrichtung
- Figur 3: eine vergrößerte Detailansicht aus Figur 2
- Figur 4: ein Lenkelement mit Antrieb aus dem Stand der Technik

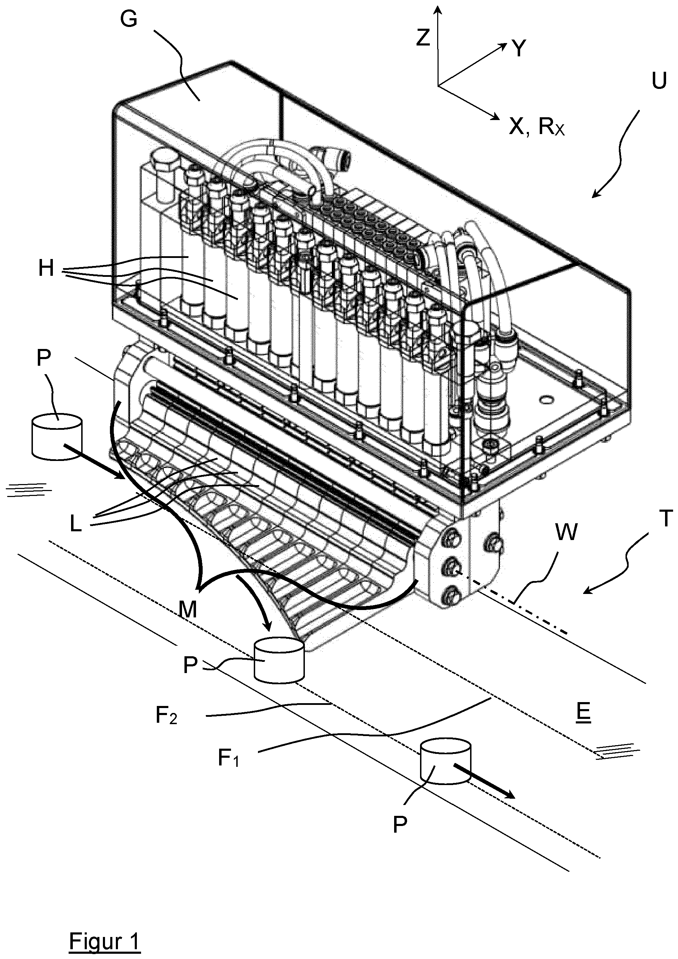

Figur 1 zeigt in perspektivische Schrägansicht eine Umlenkeinrichtung U, die oberhalb und seitlich leicht versetzt zu einer Förderebene E einer Fördereinrichtung T angeordnet ist. Die Umlenkeinrichtung U umfasst ein dichtes Gehäuse G, welches sich in einer Längsrichtung X, einer dazu orthogonal verlaufenden Querrichtung Y und einer zu beiden Richtungen X, Y orthogonal verlaufenden Höhenrichtung Z erstreckt. Die Fördereinrichtung T fördert Produkte P in einer Förderrichtung Rx, die in diesem Ausführungsbeispiel parallel zur Längsrichtung X verläuft. Innerhalb des Gehäuses G sind mehrere Pneumatikzylinder als Antriebe H in Längsrichtung X hintereinander angeordnet, von denen einige beispielhaft gekennzeichnet sind. Über einen für alle Antriebe gemeinsamen Druckluftanschluss und geeignete ansteuerbare Verteilerventile lassen sich die einzelnen Druckluftzylinder für den Vorschub oder den Rückhub der jeweiligen Kolbenstange ansteuern.

Unterhalb des Gehäuses G ist eine aus mehreren Lenkelementen L gebildete Baugruppe als Modul M am Gehäuse angeordnet, wobei nur einige der Lenkelemente L beispielhaft gekennzeichnet sind. Jeder Antrieb H ist dazu vorgesehen, über ein in dieser Ausführungsform als Kolbenstange ausgebildetes Antriebselement ein ihm zugeordnetes Lenkelement aus einer Bereitschaftslage in eine Arbeitslage und zurück zu verschwenken. Die in Figur 1 nicht zu sehenden Antriebselemente K erstrecken sich dabei durch jeweils zugehörige Durchtrittsöffnungen N auf der Unterseite des Gehäuses, um unterhalb des Gehäuses auf die Lenkelemente einzuwirken. Zum einfachen Austausch ist die Baugruppe mit allen Lenkelementen als Modul M vom Gehäuse G lösbar.

Die Förderebene E wird gebildet durch die Oberfläche eines nicht näher bezeichneten Transportbands der Fördereinrichtung T. Das Transportband bewegt einzelne Produkte P, welche in verschiedenen Spuren auf dem Förderband entlang gefördert werden können. Figur 1 zeigt dazu ein Produkt P, welches in einer Spur Fi an die Umlenkeinrichtung U herangefördert wird. Durch Einwirkung einiger Lenkelemente des Moduls M wird das Produkt P während seiner Weiterförderung zunächst auf eine zur ersten Spur Fi parallel verlaufende zweite Spur F₂ umgelenkt, und anschließend entlang dieser zweiten Spur weiter gefördert. Durch gezielte Auswahl der jeweils zu verschwenkenden Lenkelemente lassen sich die geförderten Produkte so gezielt auf verschiedene Spuren umlenken. Je nach Breite des Transportbands ist es außerdem möglich, ein Produkt auch gänzlich vom Transportband herunter zu lenken, beispielsweise um es als Fehlprodukt auszusortieren.

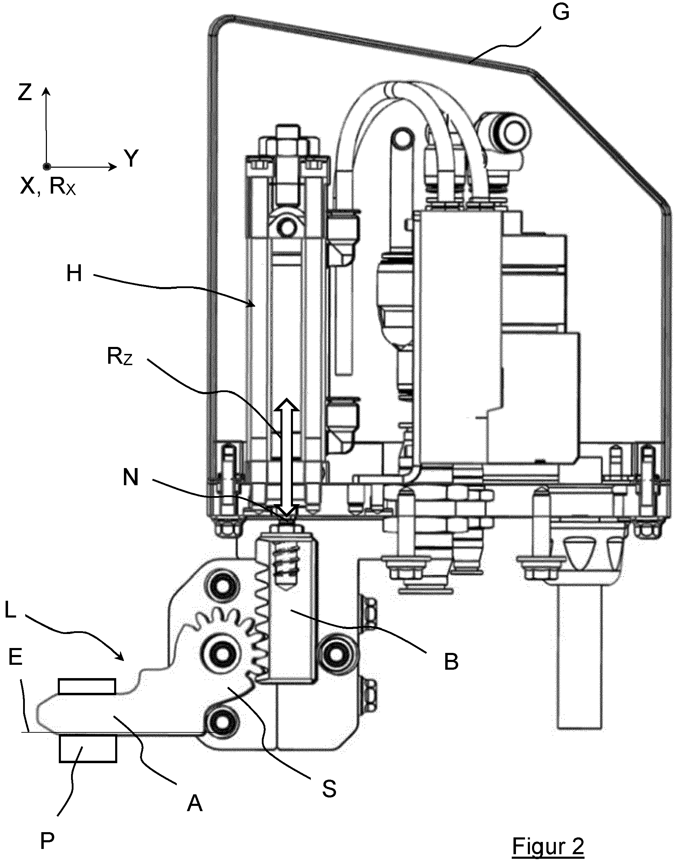

Figur 2 zeigt in vereinfachter schematischer Seitenansicht einen Schnitt durch die Umlenkeinrichtung mit Blick entgegen der Längsrichtung X. Innerhalb des Gehäuses G ist einer der Antriebe H als Pneumatikzylinder zu sehen, der über nicht näher bezeichnete Versorgungsleitungen und Ventile mit Druckluft beaufschlagbar ist. Der Antrieb ist starr mit dem Gehäuse verbunden und vollzieht während des Betriebs keinerlei Schwenkbewegung relativ zum Gehäuse. Ein in dieser Darstellung nicht unmittelbar zu erkennendes Antriebselement K in Form einer Kolbenstange wird vom Pneumatikzylinder H in einer vom dargestellten Pfeil angedeuteten geraden Vorschubrichtung Rz durch eine Durchtrittsöffnung N in der Unterseite des Gehäuses G hindurch vor- und zurückgeschoben. An ihrem unteren Ende und außerhalb des Gehäuses ist die Kolbenstange mit einem Kupplungselement B verbunden, welches mit einem Schwenkabschnitt S des Lenkelements L zusammenwirkt, um die Vorschubbewegung der Kolbenstange in eine Schwenkbewegung des Lenkelements L umzuwandeln. An den Schwenkabschnitt S grenzt ein Lenkabschnitt A, der zur Beaufschlagung und Umlenkung eines Produkts vorgesehen ist.

Figur 2 zeigt das Lenkelement L in seiner Arbeitslage, in der es sich mit einem Lenkabschnitt A knapp oberhalb der Förderebene E und etwa parallel zu dieser erstreckt. Dabei liegt es in einer Spur eines Produktes P, welches in Querrichtung Y aus dieser Spur heraus gelenkt werden soll. Mithilfe des Antriebs H ist das Lenkelement aus der gezeigten Arbeitslage um etwa 90° im Uhrzeigersinn verschwenkbar in eine Bereitschaftslage, in der sich der Lenkabschnitt A etwa in Höhenrichtung Z erstreckt. In dieser (nicht dargestellten) Bereitschaftslage ragen die Lenkelemente nicht in die Spuren der Produkte P, sodass diese ungehindert entlang ihrer Spuren weitertransportiert werden können.

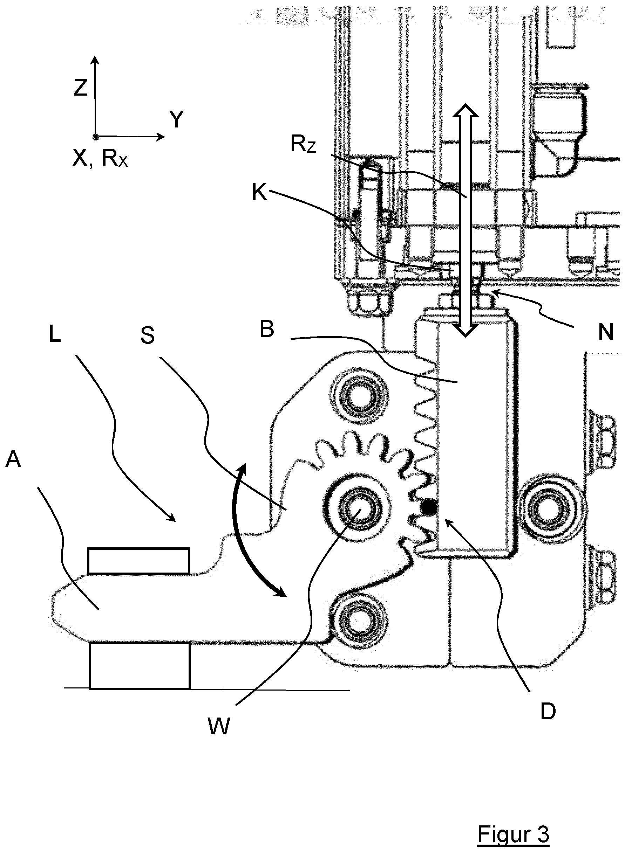

Figur 3 zeigt einen vergrößerten Ausschnitt aus Figur 2. Zu sehen ist, wie sich die Kolbenstange als Antriebselement K durch die Durchtrittsöffnung N in der Unterseite des Gehäuses G hindurch erstreckt und in Vorschubrichtung Rz vor und zurück bewegbar ist. Das mit dem Antriebselement K verbundene Kopplungselement B umfasst eine gerade Zahnstange, deren Zähne mit einem als Zahnradabschnitt ausgebildeten Schwenkabschnitt S des Lenkelements L kämmen. Durch die Vor- und Zurückbewegung des Antriebselements K treibt das Kopplungselement B das Lenkelement L zu einer Schwenkbewegung um die Schwenkachse Wan, um den mit dem Schwenkabschnitt S verbundenen Lenkabschnitt A wahlweise in die (in Figur 3 dargestellte) Bereitschaftslage herunter zu klappen oder in die (in Figur 3 nicht dargestellte) Arbeitslage herauf zu klappen.

Während des Vorschubs greift das Kopplungselement B über einen Angriffspunkt D am Zahnradprofil des Schwenkabschnitts S an. Aufgrund der linearen Vorschubbewegung des Antriebselements K mit dem Kopplungselement B und dessen Abwälzbewegung am Schwenkabschnitt S verändert der Angriffspunkt D während des Vorschubs seine Position im Raum nicht und bleibt stattdessen ortsfest. Dies hat mehrere Vorteile:
- Der Schwenkwinkel ist direkt linear abhängig von der Vorschubposition des Antriebselements K, anders als im Stand der Technik gemäß Figur 4. Gleichermaßen hängt die Schwenkgeschwindigkeit des Lenkelements L direkt linear ab von der Vorschubgeschwindigkeit des Antriebselements K.
- Das Lenkelement L als Teil des Moduls M lässt sich besonders leicht austauschen durch Entnahme des Moduls M in bzw. entgegen der Querrichtung Y. Dadurch werden die zuvor ineinandergreifenden Zähne des Kopplungselements B bzw. des Schwenk abschnitts S leicht außer Eingriff gebracht, ohne dass eine sonstige Kopplung zwischen Lenkelement L und Antrieb H gelöst werden müsste. Ein alternativ einzusetzendes neues Modul lässt sich in umgekehrter Richtung wieder so an der Umlenkeinrichtung anordnen, dass jeweils die Verzahnung zwischen Lenkelement L und Kopplungselement B wieder hergestellt wird. Das Modul ist dann sofort betriebsbereit. Besonders praktisch ist diese Art des modularen Austausches für Module mit mehreren Lenkelementen, vorzugsweise in einer Anzahl von mehr als zwei, weiterhin bevorzugt mehr als fünf, höchst bevorzugt mehr als zehn.
- Der Angriffspunkt D kann vorteilhaft dadurch ortsfest beibehalten werden, dass das Antriebselement in einer geraden Vorschubrichtung durch die Durchtrittsöffnung hindurchgeschoben wird. Ein seitlicher Versatz des Antriebselements (in Längsrichtung X oder Querrichtung Y) während des Vorschubs erfolgt nicht, so dass ein für den Betrieb notwendiger (vorzugsweise kreisringförmiger) Spalt zwischen dem Antriebselement und dem Gehäuse G in der Durchtrittsöffnung N leicht und gut (vorzugsweise hermetisch) abgedichtet werden kann.

In Figur 1 ist zu erkennen, dass das Modul M mehrere Lenkelemente L mit unterschiedlich langen Lenkabschnitten A umfasst. Die Lenkelemente L sind dabei mit - in Förderrichtung Rx gesehen - aufsteigender Länge ihrer Lenkabschnitte A hintereinander auf eine gemeinsame Schwenkachse W aufgeschoben, die sich ebenfalls in Längsrichtung erstreckt. An ihrem der Schwenkachse W abgewandten freien Ende sind die Lenkabschnitte jeweils mit einer gekrümmten Kontur versehen, an welcher sich ein Produkt P im Kontaktfall entlang bewegt und dabei in Querrichtung Y abgelenkt wird. Vorzugsweise sind Konturen unmittelbar benachbarter Lenkabschnitte so gewählt, dass sie versatzlos ineinander übergehen. Dadurch wird eine besonders schonende und impulsarme Umlenkung der Produkte erreicht.

### Bezugszeichen

- A: Lenkabschnitt
- B: Kopplungselement
- D: Angriffspunkt
- E: Förderebene
- F₁, F₂: Spuren auf der Förderebene E
- G: Gehäuse
- H: Antrieb
- K: Antriebselement
- L: Lenkelement
- M: Modulare Baugruppe mit den Lenkelementen
- N: Durchtrittsöffnung
- P: Produkt
- R_{Z}: gerade Vorschubrichtung
- R_{X}: Förderrichtung
- S: Schwenkabschnitt eines Lenkelements L
- T: Fördereinrichtung
- U: Umlenkeinrichtung
- W: Schwenkachse eines Lenkelements L
- X: Längsrichtung
- Y: Querrichtung
- Z: Höhenrichtung

## Patentansprüche

1. Modulare Umlenkeinrichtung (U), umfassend wenigstens zwei Lenkelemente (L) zur lenkenden Beaufschlagung von entlang einer Förderebene (E) bewegten, diskreten Produkten (P),
a) wobei jedes Lenkelement einen um eine Schwenkachse (Vη ausgebildeten Schwenkabschnitt (S) aufweist mit einem sich an den Schwenkabschnitt (S) anschließenden Lenkabschnitt (A), wobei der Lenkabschnitt (A) zur lenkenden Beaufschlagung eines zu sortierenden Produktes (P) ausgebildet ist, und
b) wobei die Umlenkeinrichtung (U) ein Gehäuse (G) aufweist, welches sich in einer Längsrichtung (X), einer dazu orthogonal verlaufenden Querrichtung (Y) und einer zu beiden Richtungen (X, Y) orthogonal verlaufenden Höhenrichtung (Z) erstreckt und eine Unterseite aufweist, und wobei im Gehäuse für jedes Lenkelement (L) jeweils ein Antrieb (H) vorgesehen ist mit einem von dem Antrieb verschieblichen Antriebselement (K),
c) wobei jedes Antriebselement (K) so mit dem Schwenkabschnitt (S) des zugehörigen Lenkelements (L) gekoppelt oder koppelbar ist, dass das Lenkelement (L) durch eine Vorschubbewegung des Antriebselements (K) in eine Schwenkbewegung um die Schwenkachse (Vη versetzt wird,
**dadurch gekennzeichnet,**
d) dass die Lenkelemente (L) mit ihren Schwenkabschnitten (S) außerhalb des Gehäuses (G) angeordnet sind,
e) und dass ein Abschnitt jedes Antriebselements (K) in einer Vorschubbewegung entlang einer geraden Vorschubrichtung (Rz) in Bezug auf das Gehäuse (G) durch jeweils eine eigene, aus dem Gehäuse (G) herausführende Durchtrittsöffnung (N) hindurchschiebbar ist.

2. Umlenkeinrichtung (U) nach Anspruch 1, **dadurch gekennzeichnet, dass** das Gehäuse unabhängig von der Schwenkposition einzelner Lenkelemente (L) gegen das unkontrollierte Eindringen von unerwünschten Substanzen an der jeweiligen Durchtrittsöffnung (N) abgedichtet ist, vorzugsweise nach einer der folgenden IP-Klassen: IP65, IP67, IP69, IP69k

3. Umlenkeinrichtung (U) nach Anspruch 1 oder 2, **dadurch gekennzeichnet, dass** das Gehäuse an wenigstens einer, vorzugsweise allen Durchtrittsöffnungen (N), jeweils mittels einer zwischen dem jeweiligen Antriebselement (K) und dem Gehäuse (G) wirkenden, vorzugsweise ringförmigen oder zylindrischen Dichtung abgedichtet ist.

4. Umlenkeinrichtung (U) nach einem der vorhergehenden Ansprüche, **dadurch gekennzeichnet, dass** die Durchtrittsöffnungen (N) in der Unterseite des Gehäuses (G) angeordnet sind.

5. Umlenkeinrichtung (U) nach einem der vorhergehenden Ansprüche, **dadurch gekennzeichnet, dass** die Vorschubrichtung (Rz) parallel zur Höhenrichtung (Z) verläuft und/oder dass die Schwenkachse (W) parallel zur Längsrichtung (X) verläuft und/oder dass die Vorschubrichtung (Rz) orthogonal zur Schwenkachse (W) verläuft und/oder dass die Durchtrittsöffnung (N) von wenigstens zwei, vorzugsweise allen Antriebselementen (K), in einer X-Y-Ebene liegt.

6. Umlenkeinrichtung (U) nach einem der vorhergehenden Ansprüche, **dadurch gekennzeichnet, dass** alle Lenkelemente (L) individuell aus einer Bereitschaftslage um eine allen Lenkelementen (L) gemeinsame Schwenkachse (Vη in eine Arbeitslage und zurück verschwenkbar sind.

7. Umlenkeinrichtung (U) nach dem vorhergehenden Anspruch, **dadurch gekennzeichnet, dass** sich der Lenkabschnitt (A) eines Lenkelements (L)
a) in der Bereitschaftslage in Höhenrichtung (Z) und/oder
b) in der Arbeitslage in Querrichtung (Y)
erstreckt.

8. Umlenkeinrichtung (U) nach einem der vorhergehenden Ansprüche, **dadurch gekennzeichnet, dass** jedes Antriebselement (K) außerhalb des Gehäuses (G) ein mit dem jeweiligen Schwenkabschnitt (S) an einem Angriffspunkt (D) gekoppeltes oder koppelbares Kopplungselement (B) zur Übertragung der Vorschubbewegung und Umwandlung in eine Schwenkbewegung des zugehörigen Lenkelements (L) aufweist, wobei der Angriffspunkt während des Vorschubs seine Position in Z-Richtung und/oder in einer X-Y-Ebene nicht verändert.

9. Umlenkeinrichtung (U) nach dem vorhergehenden Anspruch, wobei das Kopplungselement (B) eine Zahnstange und das Schwenkelement (S) ein um die Schwenkachse ausgebildetes Zahnradprofil aufweist, so dass die Zahnstange während des Vorschubs in gerader Vorschubrichtung (Rz) verschoben wird, während das mit der Zahnstange kämmende Zahnradprofil des Lenkelements (L) daran abwälzt und das Lenkelement (L) dadurch verschwenkt.

10. Umlenkeinrichtung (U) nach einem der vorigen Ansprüche, wobei die Lenkelemente zur Einnahme der Arbeitslage oder der Bereitschaftslage vorgespannt, insbesondere federvorgespannt, sind, sodass entweder die Vorschubbewegung oder eine entgegengesetzte Rückzugbewegung des Antriebselement (K) so gegen die Vorspannung erfolgt, dass das Lenkelement bei Ausfall des Antriebs automatisch die von der Vorspannung angestrebte Lage einnimmt.

11. Umlenkeinrichtung (U) nach einem der vorigen Ansprüche, wobei eine die Lenkelemente (L) gemeinsam aufnehmende Baugruppe (M) zum Austausch oder zu Wartungszwecken modular von der Umlenkeinrichtung (U) lösbar ist.

12. Anordnung einer Umlenkeinrichtung (U) nach einem der vorigen Ansprüche an einer Fördereinrichtung (F),
a) wobei die Fördereinrichtung (F) dazu ausgebildet ist, Produkte in mindestens einer über eine Förderebene (E) führende Spur in einer Förderrichtung (Rx) zu fördern,
b) und wobei die Umlenkeinrichtung (U) derart an die Fördereinrichtung (F) angrenzt, dass wenigstens ein Lenkelement (L) der Umlenkeinrichtung (U) in die Spur eines geförderten Produktes (P) hinein verschwenkbar ist, um das Produkt durch Kontakt mit dem Lenkelement (L) dadurch auf eine andere Spur umzulenken.

13. Anordnung nach dem vorhergehenden Anspruch, wobei
a) die Förderrichtung (Rx) parallel zur Schwenkachse (Vη und/oder zur Längsrichtung (X) verläuft, und/oder
b) die Vorschubrichtung (Rz) orthogonal zur Förderebene (E) verläuft, und/oder
c) die Durchtrittsöffnungen (N) aus einer vorzugsweise zur Förderebene (E) parallelen Unterseite des Gehäuses herausführen.
